# EUROPEAN PATENT APPLICATION

(11) **EP 2 886 234 A1**
(43) Date of publication of application: **24.06.2015**
(21) Application number: 13199202.6
(22) Date of filing: 20.12.2013
(51) Int. Cl.: B23F 23/06, B23F 5/22, B23Q 3/06, B23F 17/00

(54) **Method for multi-gear hobbing and its application thereof**

(71) Applicant: Shivam Autotech Ltd., 110017 New Delhi (IN)
(72) Inventor: Munjal, Neeraj, 110017 New Delhi (IN)
(74) Representative: Bittner, Bernhard

(57) **Abstract**

A method for multi-gear hobbing and its application thereof towards hobbing more than one gear work-pieces simultaneously using single hob cutter, preferably on an automatic dry hob milling machine; wherein said hobbing operation mainly involves a work-arbor loaded with a virtual gear work piece comprising of preferably plurality of gear work-pieces, with or without plurality of spacer elements therein, stacked together on the work-arbor; a hob cutter suitable for hobbing on the complete cylindrical surface of said virtual gear work-piece; and effective fume control module and air cooling system, preferably as essential part of the automatic dry hobbing machines.

## Description

### Technical field of the present invention:

The present invention generally discloses a method for hobbing more than one gear work-pieces simultaneously using single hob cutter. The present invention mainly relates to simultaneous hobbing of multiple work-pieces of preferably single type of gear on state of the art high speed automated dry hobbing machines, being used in gear hobbing industries.

### Background and object of the present invention:

Hobbing is the most widely used gear cutting process for creating spur and helical gears and more gears are cut by hobbing than any other process since it is relatively quick.

Apart from maintaining the desired quality and high abrasion resistance properties of the gears, *quick manufacturing of a gear in least possible time, involving minimum resources* is the most important aspect in cost effective manufacturing of teethed gears.

In conventional practice the hob cutting machine is so customized for hobbing gear work-pieces one by one. Such hobbing operations are conventionally automated by certain software or logic mechanism applicable therein and one cycle of hobbing operation gets completed within few seconds or within few minutes, depending on the diameter of the gear work-piece.

Main object of the present invention is to propose a method for performing hobbing operation on more than one gear work-pieces simultaneously by operating single hob cutter on them, preferably on an automatic dry hobbing machine.

Another object of the present invention is to propose an optional module towards loading/mounting, preferably as vertical or horizontal stacking as the case may be, of more than one gear work-pieces on the work-arbor simultaneously, preferably the automatic loading of a set of pre-determined number of gear work-pieces on a suitable work-arbor.

Another object of the present invention is to propose a virtual gear work-piece, as a virtual cylindrical gear work-piece, which is actually created on the work-arbor of the hobbing machine therein involved, by stacking/mounting of multiple gear work-pieces therein, wherein the diameter of the said virtual gear work-piece is similar to each individual gear work-piece mounted thereof and the thickness of said virtual gear work-piece is equal to or more than the total sum of the thicknesses of all gear work-pieces, simultaneously mounted on the work arbor for simultaneous hobbing.

Another object of the present invention is to propose the application of certain type of spacer elements, which are optionally applied in creating the said virtual gear work-pieces on the work-arbor, wherein such spacer elements and gear work-pieces are simultaneously loaded/mounted on the work arbor one after another alternatively, and therefore the total thickness of said virtual gear element, made of alternately arranged gear work-pieces and spacer elements, is more than the sum total of the thicknesses of the gear work-pieces mounted therein to be hobbed simultaneously.

Another object of the present invention is to propose a work-arbor, which is capable of holding and handling said virtual cylindrical gear work-piece, comprising of multiple gear work-pieces and optionally multiple spacer elements therein, during the simultaneous hobbing operation using single hob cutter on them; wherein it is capable of performing its pre-defined mechanical functions and movements to support the proposed hobbing operation herein, in co-ordination with the functional hob cutter therein.

Another object of the present invention is to propose a hob or hob cutter, wherein said single hob or hob cutter is capable of cutting teeth on the cylindrical round surface of the virtual cylindrical gear work-piece, comprising of multiple gear work-pieces and optionally multiple spacer elements therein, mounted on the work-arbor; wherein it is capable of performing its pre-defined mechanical hob cutting functions and movements thereto to support the proposed hobbing operation herein, in co-ordination with the functional work-arbor therein.

Another object of the present invention is to propose an optional module towards automatic unloading of simultaneously hobbed multiple gears from the work arbor of the hobbing machine.

Another object of the present invention is to propose an effective fume control module including an effective exhaust fan therein, which is required in the automatic dry hobbing machines.

### Description of the present invention:

The present invention generally relates to a novel automatic hobbing operation on a gear hobbing machine wherein more than one gear work pieces are simultaneously mounted on a suitably designed and structured work-arbor. The work-arbor is so designed, that it can effectively hold plurality of gear work-pieces and can carry out its pre-defined mechanical functions and movements towards performing simultaneous hobbing operation on multiple gear work-pieces therein. Such simultaneous multi hobbing operation is applicable for several types of gears, viz. spur and helical gears, crowned and tapered gears, worm gears, pinions etc.; wherein the teeth profile is to be created on the round cylindrical surface of each of them, simultaneously mounted as a virtual cylindrical gear work piece on the work-arbor. Once the gear work pieces, preferably in a particular number according to the dimension and functional abilities of the work-arbor and the hob cutter thereof, are mounted on the work-arbor of the automated software guided hob milling machines, a virtual cylindrical gear work-piece gets created there, wherein the complete cylindrical surface of said virtual cylindrical gear work piece is subjected to a single hob cutter. Said hob cutter is of such a dimension, preferably of its hob cutting teeth profile, length of hob cutter and the diameter of said hob cutting teeth profile thereof , that it can cut corresponding teeth profiles on all the gear work pieces simultaneously in the desired manner and angles. For such simultaneous hobbing operation on said virtual cylindrical gear work piece is suitably programmed to perform mutual vertical/horizontal movements of hob cutter and the work-arbor, RPM of hob cutter therein, frequency of work-arbor towards its rotational motion therein etc.

The frequency of performing hob action is regulated by certain software and/or suitable logic program.

In a particular preferred exemplary instance of simultaneous hobbing operation on said virtual cylindrical gear work piece, the process proceeds in following stepwise manner:
Step I: Preparation of gear blank work pieces for hobbing, mainly by forging operations;
Step II: Mounting of a particular number of gear work-pieces on the work-arbor, preferably in vertical position on the work-arbor and creating a virtual cylindrical gear work-piece therein, preferably automatically;
Step III: Preferably in automatic manner, subjecting the set of said particular number of gear work pieces, as the virtual cylindrical gear work-piece therein to a functional cylindrical Hob cutter, preferably positioned in horizontal/vertical or angular direction, towards simultaneous hobbing operation on those gear work pieces for generating corresponding teeth on the complete cylindrical surface of said virtual cylindrical gear.
Step IV: After simultaneous hobbing of multiple gear work pieces, removal of finished gears from the work-arbor and reloading of same number of gear work pieces on same work-arbor, preferably automatically.

As the contact area and time between the virtual gear work piece and the hob cutter is considerably increased in the present proposed simultaneous hobbing operation on multiple gear work pieces, therefore it is likely that substantially large volume of fumes gets generated and considerably high heat is evolved during the operation. Therefore it is important to apply an effective module for expelling said fumes and heat generated, preferably in a dry manner. An effective exhaust fan and effective air circulation duct is provisioned around the action area of the hob cutter in use.

For one preferred exemplary embodiment of a gear work piece being hobbed herein, preferably on a dry automatic Liebherr hob milling machine, the thickness or length of the cylindrical surface of the gear work piece is 12mm and its diameter is in a range of 40 to 50 mm. It is important that the hob milling machine chosen herein is of same platform, which is conventionally applicable for hobbing similar gear work pieces one-by-one and not simultaneously. Therefore the total thickness or the length of the cylindrical round surface of said virtual cylindrical gear work piece, made of five individual gear work pieces thereof, is 60mm. The diameter of said virtual cylindrical gear work piece is same as all five individual gear work pieces mounted therein on the work-arbor, that is in the range of 40 to 50 mm.

If hobbing operation is performed in conventional manner on the same automatic dry hobbing machine, only one gear work piece would be hobbed by consuming time of one hobbing cycle and this time is preferably 75 seconds. But as per the proposed method of simultaneous hobbing of multiple gear work pieces herein, the total time consumed in one complete hobbing cycle for creating teeth on the complete cylindrical surface of said virtual cylindrical gear work piece herein, which comprises of five individual gear work pieces, is also preferably 75 seconds. Therefore the time consumed for one hobbing cycle of one gear work piece of thickness 12mm remains one fifth of the total 75 seconds consumed for hobbing of said virtual cylindrical gear work piece, that is, only 15 second.

Again, in another preferred exemplary instance of simultaneous hobbing operation, the gear work pieces are such that there are certain lugs provisioned on one of its flat surfaces. As the surfaces of the gear work pieces are not smooth and are not suitable for stacking of multiple pieces of said gear pieces and therefore certain spacer elements are sandwiched between two gear work pieces, leading to a proper virtual cylindrical gear work piece. Thus a preferred exemplary embodiment of virtual cylindrical gear work piece gets created comprising of alternately arranged individual actual gear work pieces and spacer elements, wherein the number of individual gear work-pieces are pre-determined. Such virtual cylindrical gear work piece, made up of multiple gear work pieces and multiple spacer elements suitably undergoes simultaneous hobbing operation, as herein proposed.

### Scope of the present invention:

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A method for multi-gear hobbing and its application thereof towards hobbing more than one gear work-pieces simultaneously using single hob cutter, preferably on an automatic dry hob milling machine; wherein said hobbing operation mainly involves:
(i) a work-arbor loaded with a virtual gear work piece comprising of preferably plurality of gear work-pieces, with or without plurality of spacer elements therein, stacked together on the work-arbor,
(ii) a hob cutter suitable for hobbing on the complete cylindrical surface of said virtual gear work-piece, and
(iii) effective fume control module and air cooling system, preferably as essential part of the automatic dry hobbing machines;

2. A method for multi-gear hobbing as claimed in claim 1, wherein said method of multi-gear hobbing is **characterized by**, at least one operations among other things, optional module towards loading/mounting of more than one gear work-pieces on the work-arbor simultaneously; stacking/mounting of said virtual gear work-piece on a suitable work-arbor; simultaneous hobbing of plurality of gear work pieces stacked/mounted on the work-arbor as said virtual gear work piece; optional module towards automatic unloading of hobbed multiple gears from said work-arbor of the hobbing machine; and functioning of a module for fume control and air cooling system, preferably in an automatic dry hobbing machine.

3. A method for multi-gear hobbing, as claimed in claim 1, wherein the hobbing operation herein is **characterized by** simultaneous hobbing on more than one gear work-pieces mounted/stacked on one suitable work-arbor, by operating single hob cutter on them, preferably on an automatic dry hobbing machine.

4. A method for multi-gear hobbing, as claimed in claim 1, wherein the hobbing machine optionally comprises of a module towards loading/mounting, preferably as vertical or horizontal stacking, as the case may be, of more than one gear work-pieces on the work-arbor simultaneously, preferably the automatic loading of a set of pre-determined number of gear work-pieces on a suitable work-arbor therein.

5. A method for multi-gear hobbing, as claimed in claim 1, wherein the virtual gear work-piece, as a virtual cylindrical gear work-piece, is actually created on the work-arbor of the hobbing machine therein, by stacking/mounting of multiple gear work-pieces therein, wherein said virtual gear work-piece is **characterized by** its diameter being same as to each individual gear work-piece mounted therein and its thickness being equal to or more than the total sum of the thicknesses of all individual gear work-pieces, simultaneously mounted on said work-arbor for simultaneous hobbing.

6. A method for multi-gear hobbing, as claimed in claim 1, wherein said spacer elements, preferably in plurality, are optionally applied in creating the said virtual gear work-pieces on the said work-arbor, wherein such spacer elements and gear work-pieces are simultaneously stacked/mounted on the work-arbor one after another, and therefore the total thickness of said virtual gear element, made of alternately arranged/stacked/mounted gear work-pieces and spacer elements, is more than the sum total of the thicknesses of individual gear work-pieces, simultaneously mounted therein.

7. A method for multi-gear hobbing, as claimed in claim 1, wherein the work-arbor of the hobbing machine is **characterized by** its capability of holding and handling said virtual gear work-piece during the simultaneous hobbing operation using single hob cutter; wherein said work-arbor is further **characterized by** is capability of performing its pre-defned mechanical functions and movements to support the proposed hobbing operation herein, in co-ordination with the functional single hob cutter therein.

8. A method for multi-gear hobbing, as claimed in claim 1, wherein said single hob or hob cutter of the hobbing machine is **characterized by** its capability of cutting teeth on the cylindrical round surface of said virtual gear work-piece, comprising of multiple individual gear work-pieces and optionally multiple spacer elements therein, mounted on the work-arbor; wherein said hob or hob cutter is further **characterized by** its capability of performing its pre-defined mechanical hob cutting functions and movements thereto to support the proposed simultaneous hobbing operation herein, in co-ordination with the functional work-arbor therein.

9. A method for multi-gear hobbing, as claimed in claim 1, wherein the hobbing machine optionally comprises of an optional module towards automatic unloading of simultaneously hobbed multiple gears from the work-arbor of said hobbing machine.

10. A method for multi-gear hobbing and its application thereof, as claimed in claim 1, wherein the hobbing machine preferably comprises of a fume control module and air cooling system, wherein it including an effective exhaust fan and effective air circulation duct around the action area of the hob cutter in use therein.
